# EUROPÄISCHE PATENTANMELDUNG

(11) **EP 4 641 192 A1**
(43) Veröffentlichungstag der Anmeldung: **29.10.2025**
(21) Anmeldenummer: 24171928.5
(22) Anmeldetag: 23.04.2024
(51) Int. Cl.: G01N 31/22, G01N 21/78, G01N 33/18

(54) **VERFAHREN ZUM BESTIMMEN VON LADUNGEN VON IN EINER FLÜSSIGEN PHASE DISPERGIERTEN KOLLOIDEN EINER PROBE, SOWIE EIN KIT UND EIN SYSTEM ZUM DURCHFÜHREN DES VERFAHRENS**

(71) Anmelder: M²Analytics GmbH, 90542 Eckental (DE)
(72) Erfinder: KOCHER, Michael, 90542 Eckental (DE)
(74) Vertreter: Louis Pöhlau Lohrentz

(57) **Zusammenfassung**

Die Erfindung betrifft ein Verfahren zum Bestimmen von Ladungen von in einer flüssigen Phase dispergierten Kolloiden einer Probe, sowie ein Kit und ein System zum Durchführen des Verfahrens.

## Beschreibung

Die Erfindung betrifft ein Verfahren zum Bestimmen von Ladungen in einer flüssigen Phase dispergierten Kolloiden einer Probe, sowie ein Kit und ein System zum Durchführen des Verfahrens.

Bei der Abwasserbehandlung, der chemischen Produktion und der Trinkwasseraufbereitung fallen Dispersionen an, die Kolloide in einer flüssigen, insbesondere wässrigen Phase, enthalten. Um diese Dispersionen oder deren jeweiligen Phasen weiterzuverarbeiten, ist es notwendig, die Kolloide möglichst von der flüssigen, insbesondere wässrigen, Phase zu trennen. Wesentliche Verfahren zur Trennung von fest-flüssig Systemen sind Flockungsverfahren. Unter dem Begriff "Flockung" wird insbesondere auch eine Fällung, Aggregation, Agglomeration oder Flockulation, Koagulation verstanden. Hierzu können Flockungsmittel eingesetzt werden. Flockungsmittel können insbesondere zumindest einer der Gruppen von Flockulanten oder Koagulanten zugeordnet werden, welche unterschiedlich auf dispergierte Bestandteile wirken können. Unter dem Begriff "Koagulation" wird das Zusammenlagern von kolloiddispersen Systemen, vorzugsweise mit einem Durchmesser von 1 nm bis 1 µm, aufgrund von elektrochemischen Wechselwirkungen, wie bspw. elektrostatische Abstoßung, verstanden. Unter dem Begriff "Flockulation" wird insbesondere das Zusammenlagern von grobdispersen Systemen, vorzugsweise mit einem Durchmesser von mehr als 1 µm, aufgrund von physikalischen Wechselwirkungen, wie bspw. Agglomeration, verstanden.

Koagulanten sind in der Regel insbesondere anorganische oder organische Flockungsmittel und Flockulanten sind insbesondere polymere Flockungsmittel oder Flockungshilfsmittel. In technischen Verfahren sind Flockungsmittel in der Regel Polymere, wobei diese synthetischen oder natürlichen Ursprungs sein können. Die Flockung kann durch die Zugabe geeigneter Flockungsmittel initiiert und/oder beschleunigt werden. Weiter werden durch die Flockung die Prozessschritte der Sedimentation, Flotation oder Filtration bei einem fest-flüssig Trennverfahren verbessert.

Kolloide, die in einer flüssigen, insbesondere wässrigen, Phase dispergiert vorliegen, weisen in der Regel eine Ladung auf. Durch diese Ladung, wird eine sogenannte Helmholtz-Doppelschicht ausgebildet, die eine Flockung durch elektrostatische Abstoßung verhindert. Unter der Bezeichnung "Ladung" wird auch eine "Ladungsdichte" von bspw. Kolloiden oder Flockungsmitteln verstanden. Durch die Zugabe von Flockungsmitteln, insbesondere Koagulanten, wird die elektrostatische Abstoßung reduziert, beispielsweise in dem ein Ladungsausgleich an einer Grenzfläche zwischen Kolloid und flüssiger Phase herbeigeführt wird. Flockungsmittel, insbesondere Koagulanten, werden dazu in der Regel mit einer definierten Ladung bereitgestellt. Anionische Ladungen werden in der Regel mit einem negativen Vorzeichen und kationische Ladungen werden in der Regel mit einem positiven Vorzeichen bezeichnet. Wird ein vollständiger Ladungsausgleich, der sogenannte Ladungsnullpunkt, oder Isoelektrischer Punkt, erreicht, heben sich anionische und kationische Ladungen gegenseitig auf. Dies kann zur Flockung der Kolloide führen, wodurch eine Trennung von fester von flüssiger Phase erreicht wird.

Zur effizienten Durchführung von technischen Verfahren, die eine fest-flüssig Trennung umfassen, ist es notwendig, den Bedarf an Flockungsmittel zu kennen, um bei einer Koagulation den Ladungsnullpunkt zu erreichen. Neben der Menge an Flockungsmittel ist es zusätzlich relevant zu wissen, ob die Kolloide kationisch oder anionisch geladen sind, um entsprechende komplementär geladene Flockungsmitteln zuzugeben. Sind weder Bedarf noch Art oder Vorzeichen der Ladung bekannt, kann es anderenfalls zu Fehldosierungen von Flockungsmitteln kommen. Dies wiederum führt zu unnötig hohen Verfahrenskosten.

Zur Ladungsbestimmung sind mehrere Verfahren im Stand der Technik beschrieben. Beispielsweise kann mittels eines Zeta-Potential-Messgeräts die Mobilität von Kolloiden einer Dispersion in einem elektrischen Feld gemessen werden. Hierbei wird ein Messergebnis in Spannung, typischerweise in mV, erhalten. Durch diese Messmethode kann jedoch nicht direkt der Bedarf an Flockungsmittel ermittelt werden. Vielmehr ist es notwendig, um den Ladungsnullpunkt zu ermitteln, solange Flockungsmittel zur Dispersion zu geben, bis das gemessene Zeta-Potential einen Wert von 0 mV erreicht hat. Alternativ zu der Mobilität der Kolloide ist es auch möglich, durch elektroakustische Schwingung einen Äquivalentwert zum Zeta-Potential zu ermitteln.

Es ist weiter bekannt, das Strömungspotential einer Kolloiddispersion zu bestimmen. Jedoch wird, wie bei der Zeta-Potential-Messung, nur ein Messergebnis mit der Einheit mV erhalten, aus dem nicht direkt der Bedarf an Flockungsmittel ermittelt werden kann. Es wird lediglich ermöglicht, eine Aussage zu treffen, ob die Kolloide kationisch oder anionisch geladen sind.

Zusätzlich liegt das Problem vor, dass gemessene Zeta-Potentiale oder Strömungspotentiale von verschiedenen Parametern wie Ladungsstärke, Salzgehalt und Viskosität der Kolloiddispersion abhängig sind. So kann die Ladung von Kolloiden unterschiedlicher Kolloiddispersionen gleich sein, wobei jedoch aufgrund von unterschiedlichen Salzkonzentrationen unterschiedliche Strömungspotentiale und Zeta-Potentiale ermittelt werden.

Weiter sind direkte und indirekte Kolloid-Titrationen zur Ermittlung des Bedarfs an Flockungsmittel bekannt. So beschreibt DE 10 2019 110 830 A1 ein Verfahren zur Flockung von in einer Suspension enthaltenen Feststoffpartikeln, sowie ein System zur Ausführung des Verfahrens, wobei der Bedarf an Flockungsmittel mittels Kolloid-Titration ermittelt wird.

Bei der Kolloid-Titration wird ein Titrant mit definierter Äquivalent-Ladung bereitgestellt und zu den Kolloiden der Dispersion titriert. Der Endpunkt der Titration entspricht dem Ladungsnullpunkt der Kolloide. Die Äquivalent-Ladung wird in der Regel mit der Einheit Äquivalent pro Volumen, also in Eq/l, mEq/l, oder µEq/l, angegeben. Über den Verbrauch des Titranten kann die Ladung von in der Dispersion umfassten Kolloiden ermittelt werden. Der Ladungsnullpunkt der Kolloide weist bei einer Messung des Zeta-Potentials oder des Strömungspotential einen Wert von 0 mV auf. Alternativ kann der Endpunkt ermittelt werden, in dem ein kationischer Farbstoff der Kolloiddispersion zugefügt wird, der mit einem Überschuss an anionischen Titrationsmittel einen Farbstoff-Komplex ausbildet, was zu einem visuellen Farbumschlag führt.

Durch Kolloid-Titration ist, im Gegensatz zur alleinigen Bestimmung des Strömungspotential oder des Zeta-Potentials einer Probe, eine direkte Berechnung des Bedarfs an Flockungsmittel möglich. Jedoch setzt die Bestimmung des Zeta-Potentials oder des Strömungspotentials während der Kolloid-Titration für den Anwender einen hohen finanziellen Aufwand voraus, da die benötigten Messgeräte sehr teuer sind.

Eine Kolloid-Titration mittels visuellen Farbumschlag ist im Vergleich zur Bestimmung des Zeta-Potentials oder des Strömungspotentials zwar eine kostengünstigere Methode, setzt jedoch ein erhöhtes Fachwissen und handwerkliches Geschick voraus. Außerdem ist ein Überschuss an Titrant notwendig, um einen Farbumschlag zu erzeugen, wobei der Farbumschlag visuell nicht exakt bestimmbar ist. Hierdurch wird die Titrationsgenauigkeit begrenzt. Des Weiteren sind Kolloid-Titrationen zeitlich aufwendige Verfahren, da zwischen den Titrationsschritten eine Gleichgewichteinstellung der Wechselwirkungen des Titranten mit den Kolloiden und/oder des Farbstoffs erfolgt.

Es ist nun eine Aufgabe der Erfindung, ein verbessertes Verfahren zum Bestimmen von Ladungen von in einer flüssigen Phase dispergierten Kolloiden einer Probe bereitzustellen, wodurch schnell, direkt, unkompliziert und kostengünstig der Bedarf an Flockungsmittel ermittelt werden kann. Weiter ist es eine Aufgabe der Erfindung ein Kit und ein verbessertes System zum Durchführen des Verfahrens bereitzustellen.

Die Aufgabe wird gelöst durch Bereitstellung eines Verfahrens zum Bestimmen von Ladungen von in einer flüssigen Phase dispergierten Kolloiden einer Probe, umfassend die folgenden Schritte:
a) Bereitstellen eines Analysevolumens umfassend ein erstes Reagenz und die Probe,
b) Hinzugeben eines zweiten Reagenzes zum Analysevolumen,
c) Bereitstellen und Hinzugeben eines dritten Reagenzes zum Analysevolumen,
   wobei das dritte Reagenz einen Farbstoff mit zumindest einer ionischen Gruppe aufweist,
   wobei der Farbstoff zumindest ein lokales Absorptionsmaximum bei einer ersten Wellenlänge aufweist,
   und wobei der Farbstoff zumindest teilweise einen Farbstoff-Komplex mit dem zweiten Reagenz bildet,
   wobei der Farbstoff-Komplex zumindest ein von dem Farbstoff unterschiedliches lokales Absorptionsmaximum bei einer zweiten Wellenlänge aufweist,
d) Bestrahlen des Analysevolumens mit einer oder mehreren Wellenlängen und Bestimmen des Verhältnisses der durchtretenden Intensität zur einfallenden Intensität unter Erhalt zumindest eines wellenlängenspezifischen ersten optischen Werts,
e) Ermitteln der Ladung der Kolloide aus den optischen Werten unter Verwendung zumindest einer Kalibrierkurve, die eine Abhängigkeit des zumindest einen wellenlängenspezifischen optischen Werts von der Ladung der Kolloide definiert,

wobei mindestens eine Wellenlänge der ein oder mehreren Wellenlängen aus dem Bereich, der aus der ersten Wellenlänge oder der zweiten Wellenlänge ±50 nm gebildet wird, ausgewählt ist,
wobei das erste oder das zweite Reagenz ein kationisches Molekül umfasst und das andere von dem ersten und zweiten Reagenz ein anionisches Molekül umfasst

Bevorzugte Ausführungsformen des erfindungsgemäßen Verfahrens sind in den Ansprüchen 2 bis 13 angegeben.

Weiter wird die Aufgabe gelöst durch Bereitstellung eines Kits zur Durchführung des Verfahrens nach einem der vorstehenden Ansprüche, umfassend das erste Reagenz, das zweite Reagenz und das dritte Reagenz.

Weiter wird die Aufgabe gelöst durch Bereitstellung eines Systems zur Durchführung des Verfahrens nach einem der Ansprüche 1 bis 13, umfassend:
- eine Analysekammer zur Aufnahme des Analysevolumens,
- ein Photometer zur Messung des Verhältnisses der durch die Analysekammer durchtretenden Intensität zu der in die Analysekammer einfallenden Intensität,
- zumindest ein erstes Reservoir für das erste Reagenz,
- zumindest ein zweites Reservoir für das zweite Reagenz,
- zumindest ein drittes Reservoir für das dritte Reagenz,
- zumindest ein viertes Reservoir für die Probe,
- zumindest eine Dosiereinheit zur Dosierung der Probe, des ersten und des zweiten und des dritten Reagenzes,
- eine Recheneinheit zur Verarbeitung von Messergebnissen.

Das erfindungsgemäße Verfahren nutzt aus, dass Photometer bereits geringste Änderungen eines Farbeindrucks mittels eines wellenlängenspezifischen optischen Werts, beispielsweise Extinktion oder Transmission, gemessen werden können. So ist es nicht, wie bei einer aus dem Stand der Technik bekannten Kolloid-Titration notwendig, zuerst die Menge an einem Reagenz mit definierter Ladung zu erfassen, die nötig ist, um den Ladungsnullpunkt zu erreichen, um anschließend über den Verbrauch des Reagenzes und der Menge an Probe die Ladung der Kolloide in der Dispersion zu berechnen.

Weiter muss im Stand der Technik jeweils auf eine Gleichgewichtseinstellung zwischen einzelnen Titrationsschritten gewartet werden, wodurch die Durchführung einer Kolloid-Titration zeitaufwendig ist. Die vielen Zeiträume des Wartens entfallen bei dem erfindungsgemäßen Verfahren, da die benötigten Reagenzien in jeweils einem einzelnen Schritt hinzugefügt werden.

Weiter ist das erfindungsgemäße Verfahren unabhängig davon verwendbar, ob die Kolloide eine kationische oder anionische Ladung aufweisen. Im Unterschied hierzu ist eine klassische Kolloid-Titration auf die Bestimmung einer kationischen Ladung beschränkt. Zur Bestimmung einer anionischen Ladung ist vielmehr eine Durchführung einer indirekten Titration erforderlich.

Durch das vorliegende Verfahren wird überaschenderweise ermöglicht, einen Wert für die Ladung von Kolloiden bereitzustellen, aus dem direkt der Bedarf eines Flockungsmittels abgeleitet werden kann. Dies bietet insbesondere einen Vorteil gegenüber Messungen des Zeta-Potentials oder des Strömungspotentials.

Außerdem sind die für die Ausführung des erfindungsgemäßen Verfahrens notwendigen Systeme in der Regel günstiger als beispielsweise ein Messgerät zur Bestimmung des Zeta-Potentials oder des Strömungspotentials. Vielmehr kann bereits ein Photometer, das eine einzelne auf einen Farbstoff abgestimmte Wellenlänge emittieren und detektieren kann, für die Durchführung des Verfahrens ausreichend sein.

Für das Bestimmen von Ladungen von in einer flüssigen Phase dispergierten Kolloiden einer Probe mittels des erfindungsgemäßen Verfahrens werden ein erstes, ein zweites und ein drittes Reagenz bereitgestellt. Das erste oder das zweite Reagenz umfasst ein kationisches Molekül und das andere von dem ersten und zweiten Reagenz umfasst ein anionisches Molekül.

Es ist möglich, dass das erste, das zweite und das dritte Reagenz mit dem erfindungsgemäßen Kit bereitgestellt wird. Es ist möglich, dass das Kit das erste Reagenz, das zweite Reagenz und/oder das dritte Reagenz jeweils in einer definierten Massenkonzentration und/oder mit einer definierten Äquivalent-Ladung umfasst. Das erste Reagenz, das zweite Reagenz und/oder das dritte Reagenz können in einer flüssigen, bevorzugt wässrigen, Phase dispergiert oder gelöst bereitgestellt werden. Alternativ ist es möglich, dass das erste Reagenz, das zweite Reagenz und/oder das dritte Reagenz als Feststoff bereitgestellt werden und insbesondere in Schritt a) in dem Analysevolumen gelöst oder dispergiert werden.

In Schritt a) wird ein Analysevolumen mit dem ersten Reagenz und der Probe bereitgestellt. Das Analysevolumen weist bevorzugt eine flüssige Phase, weiter bevorzugt eine wässrige, Phase auf.

Es ist möglich, dass das Analysevolumen zu Beginn von Schritt a) das erste Reagenz umfasst und in einem Teilschritt von Schritt a) die Probe zu dem Analysevolumen hinzugegeben wird. Alternativ ist es möglich, dass das Analysevolumen zu Beginn von Schritt a) die Probe umfasst und in einem Teilschritt von Schritt a) das erste Reagenz zu dem Analysevolumen hinzugegeben wird. In einer weiteren Alternative ist es möglich, dass das Analysevolumen zu Beginn weder das erste Reagenz noch die Probe aufweist, wobei das erste Reagenz und die Probe in einem Teilschritt von Schritt a) zu dem Analysevolumen hinzugegeben werden.

Das erste Reagenz kann in einer flüssigen Phase, bevorzugt einer wässrigen Phase, gelöst oder dispergiert bereitgestellt werden. Alternativ ist es möglich, dass das erste Reagenz als Feststoff bereitgestellt wird und in dem Analysevolumen gelöst oder dispergiert wird.

Die Probe umfasst eine flüssige, bevorzugt wässrige, Phase, und in der flüssigen, bevorzugt wässrigen, Phase dispergierte Kolloide.

Die Probe ist bevorzugt eine Probe aus einer Abwasserbehandlung, eine Probe aus einer chemischen Produktion, insbesondere das Produkt der chemischen Produktion, und/oder eine Probe aus einer Trinkwasseraufbereitung. Die Probe kann einen pH-Puffer aufweisen oder mit diesem bereitgestellt werden, so dass der pH-Wert der Probe gezielt eingestellt und/oder möglichst konstant gehalten werden kann. Der pH-Wert kann die Ladung der Kolloide beeinflussen. Vorzugsweise werden die erste, zweite und/oder dritte Reagenz, bevorzugt das Kit, in Abhängigkeit von der Probe gewählt.

Bei den Kolloiden handelt es sich vorzugsweise um kolloidale Feststoffpartikel, dispergierte Gasblasen und/oder dispergierte Tröpfchen. Die Kolloide können anorganische und/oder organische Bestandteile aufweisen. Es ist möglich, dass die Kolloide einen volumenbezogenen Durchmesser, beispielsweise ausgewählt aus einem Bereich von einem Nanometer bis einem Mikrometer, aufweisen. Es ist möglich, dass die Probe Flocken, Agglomerate, Aggregate, Koagulate, Schaum und/oder Kombinationen davon aufweist, die insbesondere aus den Kolloiden gebildet sind oder die Kolloide als Primärteilchen aufweisen. Die Flocken, Agglomerate, Aggregate, Koagulate, Schaum und/oder Kombinationen davon können jede Größenordnung oder Größenverteilung aufweisen.

Bevorzugt weist die Probe dispergierte Feststoffpartikel auf. Unter dem Begriff "Feststoffpartikel" werden auch Partikel verstanden, die bei der Bereitstellung der Probe in der flüssigen Phase der Probe gelöst vorliegen und erst durch die Zugabe von Reagenzien, insbesondere dem ersten, zweiten, und/oder dritten Reagenz, in eine feste Phase überführt werden. Weiter ist es möglich, dass die Probe dispergierte Gasblasen und/oder dispergierte Tröpfchen aufweist, wobei hierunter auch Gasblasen und/oder dispergierte Tröpfchen verstanden werden, die bei der Bereitstellung der Probe in der flüssigen Phase der Probe gelöst vorliegen und erst durch die Zugabe von Reagenzien, insbesondere dem ersten, zweiten, und/oder dritten Reagenz, in eine Gasphase und/oder flüssige Phase überführt werden.

In Schritt b) wird ein zweites Reagenz zu dem Analysevolumen aus Schritt a) hinzugegeben. Das zweite Reagenz kann in einer flüssigen Phase, bevorzugt einer wässrigen Phase, gelöst oder dispergiert bereitgestellt werden, bevor es zum Analysevolumen hinzugegeben wird. Alternativ ist es möglich, dass das zweite Reagenz als Feststoff bereitgestellt wird und in dem Analysevolumen gelöst oder dispergiert wird.

Bei einer bevorzugten Ausführungsform sind das erste oder das zweite Reagenz ein Polyelektrolyt, bevorzugt ein organischer oder anorganischer Polyelektrolyt. Unter dem Begriff "Polyelektrolyt" wird ein Polymer verstanden, dass zumindest eine funktionelle Gruppe umfasst, die in einer wässrigen Dispersion zumindest eine ionischen Ladung ausbildet. Bei einer weiter bevorzugten Ausführungsform sind das erste und das zweite Reagenz Polyelektrolyten. Bei einer bevorzugten Ausführungsform ist das erste oder das zweite Reagenz ein kationischer Polyelektrolyt, und das andere von dem ersten und zweiten Reagenz ist ein anionischer Polyelektrolyt.

Es kann vorteilhaft sein, dass das von dem ersten Reagenz umfasste kationische oder anionische Molekül und/oder das vom zweiten Reagenz umfasste kationische oder anionische Molekül eine Molmasse aufweist, die aus einem Bereich von 150 g/mol bis 500.000 g/mol, bevorzugt von 200 g/mol bis 250.000 g/mol, weiter bevorzugt von 250 g/mol bis 150.000 g/mol, ausgewählt ist. Von vorstehender Molmasse werden die jeweiligen Gegenionen der ionischen Gruppen umfasst. Weist das Molekül eine Molmassenverteilung auf, insbesondere wenn das anionische oder kationische Molekül als Polyelektrolyt bereitgestellt wird, wird unter der Molmasse das Massenmittel der Molmassenverteilung verstanden. Durch die bevorzugte Molmasse weisen die Moleküle ein geringes Verhältnis von Äquivalentladung zu Masse auf, so dass eine ausreichende Genauigkeit bei der Einwaage bei ausreichender Löslichkeit oder Dispergierbarkeit in der flüssigen Phase erhalten wird.

Es ist möglich, dass das kationische Molekül zumindest einen quartären Stickstoff und/oder einen protonierten Stickstoff aufweist. Bevorzugt weist das kationische Molekül zumindest ein Amin, Amid und/oder ein Derivat eines Amin oder Amids auf. Bevorzugt wirkt das kationische Molekül als Base, insbesondere als sehr starke, starke, mittelstarke und/oder schwache Base.

Bei einer bevorzugten Ausführungsform ist es möglich, dass das kationische organische Molekül aus der Gruppe, die aus *N,N,N*-Trimethyl-1-hexadecan-aminiumbromid (CTAB), Polyamid, Polydiallyldimethylammoniumchlorid (PolyDADMAC), Thymin und/oder Kombinationen oder Derivaten davon besteht, ausgewählt ist.

Es ist möglich, dass das anionische Molekül ein anionisches anorganisches Molekül ist. Bevorzugt umfasst das anionische anorganische Molekül eine deprotonierte Gruppe, die aus der Gruppe, die aus Chlorid, Chlorat, Jodid, Jodat, Carbonat, Sulfat, Sulfit, Phosphat und/oder Kombinationen davon besteht, ausgewählt ist. Weiter ist es möglich, dass das kationische anorganische Molekül als ein Metallhydroxid bereitgestellt wird und/oder als Säure, insbesondere als sehr starke, starke, mittelstarke und/oder schwache Säure, wirkt.

Es ist möglich, dass das anionische Molekül ein anionisches organisches Molekül ist. Bevorzugt umfasst das anionische, bevorzugt anionisch organische Molekül, eine deprotonierte Gruppe, die aus der Gruppe, die aus Carboxy-Gruppe, Sulfonsäure-Gruppe, Schwefelsäure-Monoester-Gruppe, Phosphonsäure-Gruppe, Phosphorsäure-Monoester-Gruppe und/oder Kombinationen davon besteht, ausgewählt ist.

Bei einer besonders bevorzugten Ausführungsform ist es möglich, dass das anionische organische Molekül aus der Gruppe, die aus Kaliumpolyvinylsulfat (KPVS), Natriumpolyvinylsulfonat (PVSA), Kaliumhydrogenphtalat, Natriumdodecylsulfat (SDS), Xanthan und/oder Mischungen davon besteht, ausgewählt ist.

Das erste und zweite Reagenz weisen vorzugsweise keine Komponenten, insbesondere anorganische Komponenten, auf, die mit Bestandteilen der Probe und/oder dem ersten und zweiten Reagenz schwerlösliche Salze bilden. Unter dem Begriff "schwerlöslichen Salze" werden insbesondere Salze verstanden, die im Gleichgewicht eine Löslichkeit in Wasser bei 20 °C von weniger als 10 g/l aufweisen. Tabellen mit in Wasser schwerlöslichen Salzen sind aus dem Stand der Technik bekannt. Ist beispielsweise bekannt, dass in der Probe größere Mengen an Barium-Ionen vorliegen, sollte kein Natriumsulfat hinzugeben werden, da es sonst zur Fällung von schwerlöslichen Bariumsulfat kommen kann. Hierdurch kann die tatsächlich vorhandene Äquivalent-Ladung des Sulfats von der theoretischen erheblich abweichen, wodurch bei der Berechnung der Ladung von Kolloiden falsche Ergebnisse erhalten würden. Als weiteres Beispiel sei genannt, dass bei Proben, die eine hohe Konzentration von gelösten Natrium oder Kalium aufweisen, kein Kaliumpolyvinylsulfat oder Natriumpolyvinylsulfonat als anionisches Reagenz verwendet werden sollte, sondern beispielsweise Xanthan und insbesondere ein anionisches drittes Reagenz.

Es ist möglich, dass das Verfahren den weiteren Schritt g) des Abtrennens der dispergierten Kolloide und/oder von Feststoffpartikeln aufweist, der bevorzugt zwischen Schritt b) und Schritt c) durchgeführt wird:
g) Vollständiges oder teilweises Abtrennen der dispergierten Kolloide und/oder von Feststoffpartikeln aus dem Analysevolumen

Das Abtrennen erfolgt bevorzugt mittels eines mechanischen Prozesses, bei dem insbesondere das Trennen aufgrund von physikalischen Eigenschaften, die bevorzugt aus der Gruppe, die aus Partikelgröße, Dichte, Form, Aggregatszustand und/oder Kombinationen davon besteht, ausgewählt sind, durchgeführt wird. Es ist möglich, dass Feststoffpartikel alternativ oder zusätzlich zu den dispergierten Kolloiden von dem Analysevolumen abgetrennt werden.

Das Abtrennen erfolgt bevorzugt mittels eines Verfahrens, das aus der Gruppe, die aus Zentrifugieren, Dekantieren, Sieben, Abschaben, Filtrieren und/oder Kombinationen davon besteht, ausgewählt ist. Bevorzugt erfolgt das Abtrennen mittels Zentrifugieren und/oder Dekantieren.

In Schritt c) wird ein drittes Reagenz zum Analysevolumen hinzugegeben. Nach Zugabe sämtlicher Reagenzien weist das Analysevolumen ein definiertes Volumen, beispielsweise 10 ml oder 20 ml, auf.

Das dritte Reagenz umfasst einen Farbstoff mit zumindest einer ionischen Gruppe. Unter dem Begriff "ionischen Gruppe" wird bevorzugt eine funktionelle Gruppe verstanden, die in der flüssigen, bevorzugt wässrigen, Phase des Analysevolumens eine ionische Ladung aufweist. Der Farbstoff kann mit zumindest einer kationischen und/oder zumindest einer anionischen Gruppe bereitgestellt werden.

Bei einer bevorzugten Ausführungsform ist es möglich, dass das erste Reagenz und das dritte Reagenz zusammen bereitgestellt werden. Mit anderen Worten ist es möglich, dass Schritt a) und Schritt c) zeitgleich durchgeführt werden. Dies ist vorteilhaft, wenn bekannt ist, dass die Probe im Vergleich zu grobdispersen Feststoffpartikeln überwiegend dispergierte Kolloide aufweist.

Bevorzugt, wenn der Farbstoff zumindest eine kationische Ladung aufweist, weist die zumindest eine ionische Gruppe bevorzugt einen pKs-Wert auf, so dass die ionische Gruppe als Base, insbesondere als sehr starke, starke, mittelstarke oder schwache Base, wirkt. Bevorzugt, wenn der Farbstoff zumindest eine anionische Ladung aufweist, weist die zumindest eine ionische Gruppe bevorzugt einen pKs-Wert auf, so dass die ionische Gruppe als Säure, insbesondere als sehr starke, starke, mittelstarke oder schwache Säure, wirkt.

Hierdurch ist sichergestellt, dass die ionische Gruppe des Farbstoffs in der flüssigen, bevorzugt wässrigen, Phase die definierte ionische Ladung aufweist.

Die zumindest eine ionische Gruppe kann aus der Gruppe, die aus AminoGruppe, Carboxyl-Gruppe, Sulfon-Gruppe und/oder Salzen davon besteht, ausgewählt sein. Weiter ist es möglich, dass die zumindest eine ionische Gruppe aus protonierbaren oder deprotonierbaren Derivaten vorstehender Gruppe aufweist.

Der Farbstoff ist insbesondere ein organisches Molekül. Er weist bevorzugt eine ionische organische Gruppe auf. Vorzugsweise wird der Farbstoff als Salz bereitgestellt.

Es ist möglich, dass der Farbstoff aus der Gruppe, die aus Azo-Farbstoff, Anthrachinon-Farbstoff, Amin-Farbstoff, Dioxazin-Farbstoff, Indiogider-Farbstoff, Methin-Farbstoff, bevorzugt Triphenyl-Farbstoff, Nitro-Farbstoff, Acridin-Farbstoff, und/oder Mischungen davon besteht, ausgewählt wird.

Bei einer bevorzugten Ausführungsform weist das erste Reagenz eine definierte erste Äquivalent-Ladung (Eq₁) auf. Weiter ist es möglich, dass das zweite Reagenz eine definierte zweite Äquivalent-Ladung (Eq₂) aufweist und/oder das dritte Reagenz eine definierte dritte Äquivalent-Ladung (Eq₃) aufweist.

Vorzugsweise wird und/oder ist die erste und/oder zweite und/oder dritte Äquivalent-Ladung (Eq₁, Eq₂, Eq₃) durch Kolloid-Titration ermittelt. Die Ermittlung durch Kolloid-Titration erfolgt bevorzugt, in dem eine Komponente, beispielsweise zumindest ein viertes Reagenz, mit definierter Ladung bereitgestellt wird und jeweils mit dem oder zu dem ersten, zweiten oder dritten Reagenz titriert wird. Die Endpunktbestimmung bzw. die Bestimmung des Ladungsnullpunkts erfolgt bevorzugt mittels Messung des Zeta-Potentials, mittels Messung des Strömungspotentials und/oder mittels Farbumschlag eines ladungsaktiven Indikators, insbesondere Farbstoffs. Der Endpunkt ist bei einem Zeta-Potential von 0 mV, einem Strömungspotential von 0 mV und/oder bei dem Farbumschlag des ladungsaktiven Indikator erreicht. Versuchsvorschriften von Kolloid-Titrationen sind aus dem Stand der Technik bekannt.

Die Äquivalent-Ladung wird bevorzugt mit der Einheit Äquivalent pro Volumen angeben. Beispielsweise in Eq/l, mEq/l oder µEq/l. Der Ladungsnullpunkt weist bevorzugt einen Wert von 0 µEq/l auf. Alternativ ist es möglich, die Äquivalent-Ladung bevorzugt auf die Masse des jeweiligen Stoffs, der die Äquivalent-Ladung aufweist, beispielsweise in Eq/g, anzugeben oder aus der volumenbezogenen Äquivalent-Ladung zu berechnen. Die Masse des jeweiligen Stoffs bezieht sich vorzugsweise auf dessen Trockenmasse. Die Trockenmasse kann beispielsweise ermittelt werden, in dem der jeweilige Stoff als Feststoff oder als eine Dispersion bereitgestellt wird und auf einer Trockenwaage bei zeitgleichem Erwärmen, insbesondere bei Temperaturen von mehr als 105 °C, bevorzugt mehr als 120 °C, bis zur Massekonstanz gewogen wird.

Alternativ ist es möglich, das erste, zweite und/oder dritte Reagenz mit definierter Äquivalent-Ladung bereitzustellen, beispielsweise durch das erfindungsgemäße Kit.

Es ist möglich, dass die erste Äquivalent-Ladung (Eq₁) mit einem Wert n bereitgestellt wird. Insbesondere wird n in der Anzahl der Äquivalent-Ladung pro Volumeneinheit angegeben. Weiter ist es möglich, dass die zweite Äquivalent-Ladung (Eq₂) mit einem Wert x.(n+1) bereitgestellt, wobei für den Faktor x gilt: x≥1, bevorzugt 2≤x≤100, weiter bevorzugt 2≤x≤10. Vorzugsweise wird die dritte Äquivalent-Ladung (Eq₃) mit einem Wert y (n+1) bereitgestellt, wobei für den Faktor y gilt: y>1, bevorzugt ≥1, weiter bevorzugt 2≤y≤100, noch weiter bevorzugt 2≤y≤10. Bei einer bevorzugten Ausführungsform sind die Faktoren x und y gleich. Insbesondere sind n, x und y aus der Menge der positiven rationalen Zahlen inklusive null, vorzugsweise der positiven rationalen Zahlen, ausgewählt. Bei einer bevorzugten Ausführungsform ist n größer 0.

Hierdurch ist es möglich, das Verhältnis an Äquivalent-Ladungen der Reagenzien, beispielsweise als Eq₁ : Eq₂ : Eq₃, anzugeben.

Das Verhältnis der Äquivalent-Ladungen im Analysevolumen kann auf unterschiedliche Weise eingestellt werden. Es ist möglich, das Volumen und/oder die Äquivalent-Ladung des bereitgestellten ersten, zweiten und dritten Reagenzes so zu variieren, dass die gewünschte Äquivalent-Ladung im Analysevolumen vorliegt. Beispielsweise ist es möglich, dass jeweils ein gleiches Volumen an ersten, zweiten und dritten Reagenz bereitgestellt wird, wobei sich die Äquivalent-Ladungen in den bereitgestellten ersten, zweiten und dritten Reagenzien unterscheiden. Alternativ ist es möglich, dass das erste, zweite und dritte Reagenz mit der gleichen Anzahl an Äquivalent-Ladungen bereitgestellt wird, wobei sich die Volumina der bereitgestellten ersten, zweiten und dritten Reagenzien unterscheiden. Es ist weiter möglich das Volumen und/oder die Verdünnung der Probe zu variieren, um den Messbereich, der benötigt wird, um eine Messung durchzuführen, einzustellen.

Insbesondere wird ein Messbereich des erfindungsgemäßen Verfahrens durch das Verhältnis der Faktoren x und y an Äquivalent-Ladungen eingestellt. Es ist möglich, dass ein symmetrischer oder ein asymmetrischer Messbereich abgedeckt wird. Beispielsweise weist ein Verhältnis (Eq₁ : Eq₂ : Eq₃) von 1:2:2 einen symmetrischen Messbereich auf.

Ein symmetrischer Messbereich ist vorteilhaft, wenn bei einer Probe unbekannt ist, ob die Kolloide kationisch oder anionisch geladen sind. Ein asymmetrischer Messbereich ist vorteilhafter, wenn beispielsweise bei routinemäßigen Messungen bereits bekannt ist, welche Art an Ladung die Kolloide aufweisen und/oder in welcher Größenordnung sie geladen sind.

Das gewählte Verhältnis wird derart gewählt, dass das zweite Reagenz das erste Reagenz, auch wenn dieses nicht reagiert hat, vorzugsweise vollständig neutralisieren kann. Wenn beim Ladungsnullpunkt von 0 Eq/l die erste Hälfte des zweiten Reagenzes zur Neutralisation des ersten Reagenzes benötigt wird, so dass die zweite Hälfte des zweites Reagenzes bei der Komplexierung der Hälfte des Farbstoffs verbraucht wird, kann dies einem symmetrischen Messbereich entsprechen.

Beispielsweise ermöglicht ein Verhältnis von Eq₁ : Eq₂ : Eq₃ von 2:2:2 die Analyse einer Probe, die nur dispergierte Kolloide mit einer anionischen Ladung aufweist. Bei einer bevorzugten Ausführungsform weist das erste Reagenz eine Äquivalent-Ladung von 0 Eq/l auf und/oder ist Wasser, wobei ein Verhältnis Eq₁ : Eq₂ : Eq₃ von 0:2:2 erhalten wird. Bei einem Verhältnis Eq₁ : Eq₂ : Eq₃ von 0:2:2 kann eine Probe analysiert werden, die nur Kolloide mit einer kationischen Ladung aufweist. Das Bereitstellen eines Messbereichs, der lediglich die Bestimmung von anionischen oder kationischen Kolloiden ist möglich, jedoch kann in der Regel in den Grenzbereichen des Messbereichs eine geringere Messgenauigkeit vorliegen. Es ist vorteilhaft, wenn als Messbereich ein Bereich derart gewählt wird, dass dieser einen Abstand zu den jeweiligen Grenzen von mindestens 1000 µEq/l, bevorzugt mindestens 500 µEq/l, zum theoretisch möglichen Messbereich aufweist.

Der Messbereich ist insbesondere derart eingestellt, dass die Bestimmung einer kationischen Ladung von bis zu 6000 µEq/l, bevorzugt bis zu 5000 µEq/l, weiter bevorzugt bis zu 4000 µEq/l, noch weiter bevorzugt 2500 µEq/l, ferner noch weiter bevorzugt +200 µEq/l, ferner noch sehr viel weiter bevorzugt +100 µEq/l, möglich ist. Alternativ oder zusätzlich ist es möglich, dass der Messbereich derart eingestellt ist, dass die Bestimmung einer anionischen Ladung von bis zu -6000 µEq/l, bevorzugt bis zu -5000 µEq/l, weiter bevorzugt bis zu -4000 µEq/l, noch weiter bevorzugt -2500 µEq/l, ferner noch weiter bevorzugt +200 µEq/l, ferner noch sehr viel weiter bevorzugt +100 µEq/l, möglich ist.

Vorzugsweise wird das erste, das zweite und/oder das dritte Reagenz mit einem Volumen, das aus einem Bereich von 0,1 ml bis 10.000 ml, bevorzugt von 1 ml bis 100 ml, weiter bevorzugt 2 ml bis 10 ml, ausgewählt ist, bereitgestellt. Die Probe wird insbesondere mit einem Volumen, das aus einem Bereich von 0,1 ml bis 10.000 ml, bevorzugt von 1 ml bis 100 ml, weiter bevorzugt 2 ml bis 10 ml, ausgewählt ist, bereitgestellt. Durch vorstehende Volumina kann eine ausreichende Messgenauigkeit bei zeitgleicher guter Handhabung gewährleistet werden. Beispielsweise hat sich ein Volumen für das erste, zweite und dritte Reagenz, sowie für die Probe von 5 ml als besonders bevorzugt erwiesen.

Bei einer bevorzugten Ausführungsform ist es möglich, dass das erste Reagenz ein kationisches Molekül umfasst, das zweite Reagenz ein anionisches Molekül umfasst und der Farbstoff ein kationischer Farbstoff ist.

Hierbei ist es möglich, dass das kationische Molekül ein kationisches organisches Molekül, bevorzugt kationischer Polyelektrolyt, ist und/oder dass das anionische Molekül ein anionisches organisches Molekül, bevorzugt anionischer Polyelektrolyt ist.

Wenn der Farbstoff als ein kationischer Farbstoff bereitgestellt wird, wird der Farbstoff vorzugsweise aus der Gruppe, die aus Acridinorange (C.I. 46005), Kristallviolett (C.I. 42555), Toluidinblau O (C.I. 52040), und/oder Mischungen davon besteht, ausgewählt. Die Abkürzung C.I. bezeichnet den "Colour Index", wobei die nachfolgende Ziffer der Farbbezeichnung des Farbstoffs im "Colour Index" entspricht.

Bei einer weiteren bevorzugten Ausführungsform ist es möglich, dass das erste Reagenz ein anionisches Molekül umfasst, das zweite Reagenz ein kationisches Molekül umfasst und der Farbstoff ein anionischer Farbstoff ist.

Hierbei ist es möglich, dass das anionische Molekül ein anionisches organisches Molekül, bevorzugt anionisches Polyelektrolyt, ist und/oder dass das kationische Molekül ein kationisches organisches Molekül, bevorzugt kationischer Polyelektrolyt, ist.

Wenn der Farbstoff als ein anionischer Farbstoff bereitgestellt wird, kann dieser beispielsweise als Eriochromschwarz T (C.I. 14645) ausgewählt werden.

Weiter weist der Farbstoff zumindest ein lokales Absorptionsmaximum bei einer ersten Wellenlänge auf. Der Farbstoff bildet zumindest teilweise mit dem zweiten Reagenz einen Farbstoff-Komplex, wobei der Farbstoff-Komplex zumindest ein von dem Farbstoff unterschiedliches lokales Absorptionsmaximum bei einer zweiten Wellenlänge aufweist.

Der Farbstoff weist bevorzugt zumindest ein lokales Absorptionsmaximum auf, dass eine erste Wellenlänge aus einem Bereich von 200 nm bis 3.500 nm, bevorzugt von 300 nm bis 2.000 nm, weiter bevorzugt von 340 nm bis 900 nm, aufweist. Alternativ oder zusätzlich weist der Farbstoff-Komplex bevorzugt zumindest ein lokales Absorptionsmaximum auf, dass eine zweite Wellenlänge aus einem Bereich von 200 nm bis 3.500 nm, bevorzugt von 300 nm bis 2.000 nm, weiter bevorzugt von 340 nm bis 900 nm, aufweist.

Besonders bevorzugt ist zumindest ein lokales Absorptionsmaximum des Farbstoffes und Farbstoff-Komplexes aus dem Bereich des für das menschliche Auge sichtbaren Wellenlängenbereichs von 400 nm bis 780 nm umfasst. Hierdurch wird es dem Anwender erleichtert, durch die wahrnehmbare Farbeindrucksänderung, die korrekte Durchführung des Verfahrens nachzuvollziehen.

Wenn der Farbstoff oder der Farbstoffkomplex mehrere lokale Absorptionsmaxima aufweist, wird vorzugsweise das absolute Absorptionsmaximum, insbesondere in einem Wellenlängenbereich von 200 nm bis 3.500 nm, bevorzugt von 300 nm bis 2.000 nm, weiter bevorzugt von 340 nm bis 900 nm, gewählt.

Bevorzugt weist die zumindest eine erste Wellenlänge einen Abstand von mindestens 20 nm, bevorzugt von mindestens 50 nm, noch weiter bevorzugt von mindestens 100 nm, zur zweiten Wellenlänge auf.

Beispielsweise weist freies Toluidinblau O ein lokales Absorptionsmaximum bei 628 nm auf, wobei das komplexierte Toluidinblau O bevorzugt ein lokales Absorptionsmaximum bei 509 nm aufweist. Eriochromschwarz T weist insbesondere ein lokales Absorptionsmaximum bei 605 nm auf, wobei das komplexierte Eriochromschwarz T bevorzugt ein lokales Absorptionsmaximum bei 555 nm aufweist.

Das Hinzugeben der Probe, des ersten Reagenzes, des zweiten Reagenzes und/oder des dritten Reagenzes zum Analysevolumen umfasst bevorzugt ein Dispergieren. Weiter ist es bevorzugt, dass zwischen und/oder während Schritten des Verfahrens, ein Schritt oder Teilschritt des Homogenisierens durchgeführt wird. Das Homogenisieren kann aus der Gruppe, die aus Rühren, Bestrahlen mit Ultraschall, Pumpen, Schwenken, Schütteln und/oder Kombinationen davon besteht, ausgewählt sein. Bevorzugt erfolgt das Homogenisieren mittels Rührens.

In Schritt d) wird das Analysevolumen mit einer oder mehreren Wellenlängen bestrahlt. Weiter wird hierbei das Verhältnis der durchtretenden Intensität zur einfallenden Intensität ermittelt, wodurch zumindest ein wellenlängenspezifischer erster optischer Wert ermittelt wird.

Die mindestens eine Wellenlänge der ein oder mehreren Wellenlängen wird aus dem Bereich, der aus der ersten Wellenlänge oder der zweiten Wellenlänge ±50 nm, bevorzugt von ±20 nm, weiter bevorzugt von ±10nm, noch weiter bevorzugt von ±2 nm, gebildet wird, ausgewählt.

Bevorzugt wird während der photometrischen Messung das optionale Homogenisieren nicht durchgeführt oder pausiert.

Vorzugsweise werden optische Werte als Extinktion oder als Transmission ermittelt. Die Messung erfolgt bevorzugt nach dem Lambert-Beerschen Gesetz. Weiter ist eine Umrechnung von Extinktion in Transmission oder umgekehrt möglich.

Es ist möglich, dass das Verfahren den weiteren Schritt f) des Bestimmens eines Blindwerts umfasst, der zwischen Schritt b) und c) durchgeführt wird:
f) Bestrahlen des Analysevolumens mit den ein oder mehreren Wellenlängen und Bestimmen des Verhältnisses der durchtretenden Intensität zur einfallenden Intensität unter Erhalt eines zweiten wellenlängenspezifischen optischen Werts.

Schritt f) wird bevorzugt analog wie zu Schritt d) beschrieben durchgeführt. Insbesondere werden dieselben ein oder mehreren Wellenlängen von Schritt d) verwendet und der zweite wellenspezifische optische Wert bevorzugt als Extinktion oder als Transmission ermittelt. Durch Schritt f) ist es möglich, dass in Schritt d) zum Bestimmen der Ladung von Kolloiden der zweite wellenlängenspezifische optische Wert von dem jeweiligen ersten wellenlängenspezifischen optischen Wert subtrahiert wird.

Weist das erfindungsgemäße Verfahren den optionalen Schritt g) des Abtrennens auf, so wird Schritt d) vorzugsweise nach dem Schritt des Abtrennens durchgeführt. Durch Schritt f) wird ermittelt, welche Absorption das Analysevolumen an den ein oder mehreren Wellenlängen aufweist, bevor das dritte Reagenz hinzugeben wird. Somit ist es möglich einen störenden Einfluss von weiteren Stoffen auf den wellenlängenspezifischen optischen Wert zu eliminieren. Es wird somit sichergestellt, dass die Änderung des Verhältnisses der durchtretenden Intensität zur einfallenden Intensität auf die Komplexbildung des Farbstoffs mit dem zweiten Reagenz zurückzuführen ist. Mit anderen Worten sollen mögliche Nebenreaktionen des Farbstoffs mit weiteren Stoffen so weit möglich verhindert werden.

In Schritt e) wird die Ladung von Kolloiden aus den optischen Werten unter Verwendung zumindest einer Kalibrierkurve ermittelt. Die Kalibrierkurve definiert die Abhängigkeit des zumindest einen wellenlängenspezifischen optischen Werts von der Ladung von Kolloiden. Vorzugsweise ist die Kalibrierkurve eine Kalibriergerade und beschreibt einen linearen Zusammenhang zwischen dem wellenlängenspezifischen optischen Wert und der Ladung von Kolloiden.

Die Kalibrierkurve wird bevorzugt in einem weiteren Schritt des Verfahrens oder vor dem Verfahren erstellt. Hierbei werden ein oder mehrere, bevorzugt zwei oder mehrere, Dispersionen, die eine definierte Zusammensetzung an dritten Reagenz und optional an ersten und zweiten Reagenz aufweisen, mit dem Photometer gemessen werden, wobei die Konzentration an freien und/oder komplexierten Farbstoffs variiert wird. Vorzugweise weisen die vorstehenden Dispersionen zumindest ein weiteres Reagenz, bevorzugt viertes Reagenz, mit definierter Äquivalent-Ladung auf, mit dem der Farbstoff des dritten Reagenzes komplexieren kann.

Die Kalibrierkurve definiert insbesondere die Abnahme des wellenlängenspezifischen optischen Werts des freien Farbstoffs oder die Zunahme des wellenlängenspezifischen optischen Werts des Farbstoffkomplexes.

Bei einer bevorzugten Ausführungsform ist das anionische Molekül ein anionisches organisches Molekül, insbesondere Polelektrolyt, das bevorzugt eine deprotonierte Gruppe, die aus der Gruppe, die aus Carboxy-Gruppe, Sulfonsäure-Gruppe, Schwefelsäure-Monoester-Gruppe, Phosphonsäure-Gruppe, Phosphorsäure-Monoester-Gruppe und/oder Kombinationen davon, besteht, ausgewählt wird, aufweist, und dass das kationische Molekül, insbesondere Polyelektrolyt, zumindest einen quartären Stickstoff und/oder einen protonierten Stickstoff aufweist.

Es ist möglich, dass das erfindungsgemäße Verfahren zur Bestimmung der Ladung von in einer flüssigen Phase dispergierten Kolloiden einer Probe in einem Differenzanalytikverfahren zur Bestimmung der Ladung von in einer flüssigen Phase dispergierten Feststoffpartikeln, Blasen und/oder Tröpfchen einer Probe verwendet wird.

Unter einem Differenzanalytikverfahren wird verstanden, dass in einem ersten Schritt die Äquivalent-Ladung der Probe umfassend Kolloide und dispergierten Feststoffpartikeln, Blasen und/oder Tröpfchen ermittelt wird und in einem zweiten Schritt die Äquivalent-Ladung der Probe umfassend Kolloide, insbesondere durch das erfindungsgemäße Verfahren, ermittelt wird. Durch die Differenzbildung der Ergebnisse des ersten und des zweiten Schritts ist es möglich die Äquivalent-Ladung der dispergierten Feststoffpartikel, Blasen und/oder Tröpfchen, bereinigt um die Äquivalent-Ladung der Kolloide zu erhalten.

Es ist weiter möglich, dass die Verfahrensschritte einmal oder mehrmals durchgeführt werden. Insbesondere können sich Verfahrensschritte wiederholen. Ein bevorzugtes Verfahren weist die folgende Schrittreihenfolge auf: a), b), c), d), e) bevorzugt a), b), f), c), d), e) oder a), b), g), c), d), e), weiter bevorzugt a), b), g), f), c), d), e) . Es ist möglich, dass zwischen dien Schritten weitere Schritte, wie beispielsweise Schritte zur Homogenisierung, eingefügt sein können.

Das Verfahren zur Bestimmung von Ladungen von in einer flüssigen Phase dispergierten Kolloiden wird bevorzugt mit einem System durchgeführt, das zumindest ein Photometer und eine Analysekammer aufweist.

Die Analysekammer ist konfiguriert zur Aufnahme des Analysevolumens und weist insbesondere zumindest ein Messfenster auf, das für die ein oder mehreren Wellenlängen zumindest teilweise transparent ist. Insbesondere ist das Messfenster für den Wellenlängenbereich von 200 nm bis 3.500 nm, bevorzugt von 300 nm bis 2.000 nm, weiter bevorzugt von 340 nm bis 900 nm, transparent.

Unter dem Begriff "transparent" wird eine Transmission von mindestens 70 %, bevorzugt von mindestens 90 %, weiter bevorzugt von mindestens 95 %, von Licht einer jeweiligen Wellenlänge verstanden.

Vorzugsweise ist die Analysekammer aus Glas, das bevorzugt aus der Gruppe, die aus Borosilikatglas, Quarzglas, optischen Glas und/oder Kombinationen davon besteht, ausgewählt ist, und/oder aus Kunststoff, der bevorzugt aus der Gruppe, die aus Polycarbonat, Polystyrol, Polyacrylat, insbesondere Polymethacrylat, und/oder Mischungen, Blends oder Copolymeren davon besteht, ausgewählt ist, gefertigt.

Die Analysekammer weist insbesondere ein Volumen zur Aufnahme des Analysevolumens auf, dass aus dem Bereich von 1 ml bis 50 ml, bevorzugt von 5 ml bis 25 ml, weiter bevorzugt von 10 ml bis 20 ml, ausgewählt ist.

Die Analysekammer weist vorzugsweise zumindest zwei gegenüberliegende Seiten auf, wobei insbesondere die Seiten jeweils Messfenster aufweisen, die einen definierten Abstand aufweisen, ausgewählt aus einem Bereich von 0,2 mm bis 50 mm, bevorzugt von 5 mm bis 35 mm, weiter bevorzugt von 7 mm bis 27 mm, noch weiter bevorzugt von 10 mm bis 15 mm. Mittels des definierten Abstands kann insbesondere der erste wellenlängenspezifische optische Wert und optional der zweite wellenlängenspezifische optische Wert ermittelt werden.

Das Photometer ist zur Messung des Verhältnisses der durch die Analysekammer durchtretenden Intensität zu der in die Analysekammer einfallenden Intensität konfiguriert. Weiter weist das Photometer zumindest ein Mittel zum Emittieren der zumindest einen ersten Wellenlänge und bevorzugt der zumindest einen ersten und zweiten Wellenlänge auf. Insbesondere kann das Photometer zumindest eine erste Wellenlänge und bevorzugt eine zweite Wellenlänge emittieren, die aus dem Wellenlängenbereich von 200 nm bis 3.500 nm, bevorzugt von 300 nm bis 2.000 nm, weiter bevorzugt von 340 nm bis 900 nm, ausgewählt sind. Als Leuchtmittel des Photometers können alle Lichtquellen, welche den erforderlichen Wellenlängen gerecht werden, vorzugsweise eine Halogenlampe, die insbesondere eine Wellenlänge ausgewählt aus einem Bereich von 320 nm bis 1.100 nm emittiert, verwendet werden. Es ist auch möglich, dass das Photometer wellenlängenspezifische Lichtquellen, beispielsweise Dioden, aufweist. Bei Lichtquellen mit einem undefinierten Wellenlängenspektrum kann zudem ein Farb-Filter und/oder ein Monochromator eingesetzt werden, wodurch nur die definierte Wellenlänge die Analysekamme erreicht. Alternativ oder zusätzlich ist es möglich, dass das Photometer einen Multiwellenlängendetektor aufweist.

Weiter weist das System vorzugsweise zumindest ein erstes Reservoir für das erste Reagenz, zumindest ein zweites Reservoir für das zweite Reagenz und zumindest ein drittes Reservoir für das dritte Reagenz auf. Weiter weist das System vorzugsweise ein Reservoir für die Probe auf, die die in einer flüssigen Phase dispergierten Kolloide umfasst. Die jeweiligen Reservoirs sind insbesondere wieder verschließbar und/oder austauschbar. Vorzugsweise weist das erste, zweite, dritte und/oder vierte Reservoir ein Mittel zum Homogenisieren auf, das aus der Gruppe, die aus Rührer, Ultraschallbad, Disperser, Mühle, Umlaufpumpe, Sonotrode und/oder Kombinationen davon besteht, ausgewählt ist.

Es ist weiter möglich, dass das System ein Mittel zum Abtrennen der dispergierten Kolloide, bevorzugt Feststoffpartikel, aufweist. Hierdurch wird verhindert, dass der Farbstoff des dritten Reagenzes mit den Kolloiden der Probe wechselwirkt. Das Mittel zum Abtrennen ist insbesondere derart konfiguriert, dass mit ihm ein mechanischer Prozess durchgeführt wird, bei dem das Trennen aufgrund von physikalischen Eigenschaften, die bevorzugt aus der Gruppe, die aus Größe, bevorzugt Partikelgröße, Dichte, Form, Aggregatszustand und/oder Kombinationen davon besteht, ausgewählt sind, durchgeführt wird.

Das Mittel zum Abtrennen ist bevorzugt aus der Gruppe, die aus Zentrifuge, insbesondere analytischer Zentrifuge, analytischer Ultra-Zentrifuge oder Dekantierzentrifuge, Sieb, Schaber, Bürste, Flotationsvorrichtung, Filter und/oder Kombinationen davon besteht, ausgewählt.

Weiter weist das System mindestens eine Dosiereinheit zur Dosierung der Probe und/oder des ersten und/oder des zweiten und/oder des dritten Reagenzes auf. Das Dosieren kann automatisch oder manuell erfolgen.

Die mindestens eine Dosiereinheit ist bevorzugt aus der Gruppe, die aus Pumpe, bevorzugt Schlauchquetschpumpe oder Spritzenpumpe, Pipette, Spritze, Waage und/oder Kombinationen davon besteht, ausgewählt. Es ist möglich, dass für die Probe oder das erste, zweite, dritte und/oder Reagenz und optional das vierte Reagenz die gleiche Dosiereinheit oder unterschiedliche Dosiereinheiten vom System umfasst sind.

Es ist möglich, dass das System zumindest eine Steuereinheit zur Steuerung der Verfahrensschritte aufweist. Durch die Steuereinheit wird der Start, die Dauer und die Durchführung eines einzelnen oder aller Schritte des erfindungsgemäßen Verfahrens gesteuert und/oder geregelt. Die Steuereinheit kann die Durchführung, bevorzugt den Start und die Dauer, automatisch steuern und/oder regeln. Alternativ ist es möglich, dass die zumindest eine Steuereinheit zur Durchführung eines weiteren Schritts ein Eingabesignal eines Anwenders benötigt.

Weiter weist das System eine Recheneinheit zur Verarbeitung und/oder zur Bewertung von Messergebnissen auf, die während des erfindungsgemäßen Verfahrens ermittelt werden. Insbesondere ist die Recheneinheit mit dem Photometer, insbesondere dem Detektor, direkt oder indirekt verbunden.

Die Recheneinheit und/oder die optionale Steuereinheit können einen Prozessor und/oder eine Ausgabeeinheit, bevorzugt einen Bildschirm oder Drucker, umfassen.

Das System kann weiter ein oder mehrere Einheiten zur Homogenisierung des Analysevolumens, der Probe, des ersten, zweiten und/oder dritten Reagenzes umfassen. Die Einheit zur Homogenisierung kann aus der Gruppe, die aus Rührer, Ultraschallbad, Disperser, Mühle, Umlaufpumpe, Sonotrode und/oder Kombinationen davon besteht, ausgewählt sein.

Selbstverständlich können auch obig angeführte Verfahrensmerkmale äquivalent in einem Produkt oder angeführte Produktmerkmale im Verfahren angewendet werden.

Im Folgenden wird die Erfindung anhand von mehreren Ausführungsbeispielen unter Zuhilfenahme der beiliegenden Zeichnungen beispielhaft erläutert. Die gezeigten Ausführungsbeispiele sind daher nicht einschränkend zu verstehen.
- Fig. 1: zeigt eine schematische Darstellung der Durchführung des erfindungsgemäßen Verfahrens.
- Fig. 2: zeigt eine beispielhafte Kalibrierkurve, die eine Abhängigkeit des zumindest einen wellenlängenspezifischen optischen Werts von der Ladung der Kolloide definiert.
- Fig. 3: zeigt eine weitere beispielhafte Kalibrierkurve, die eine Abhängigkeit des zumindest einen wellenlängenspezifischen optischen Werts von der Ladung der Kolloide definiert.

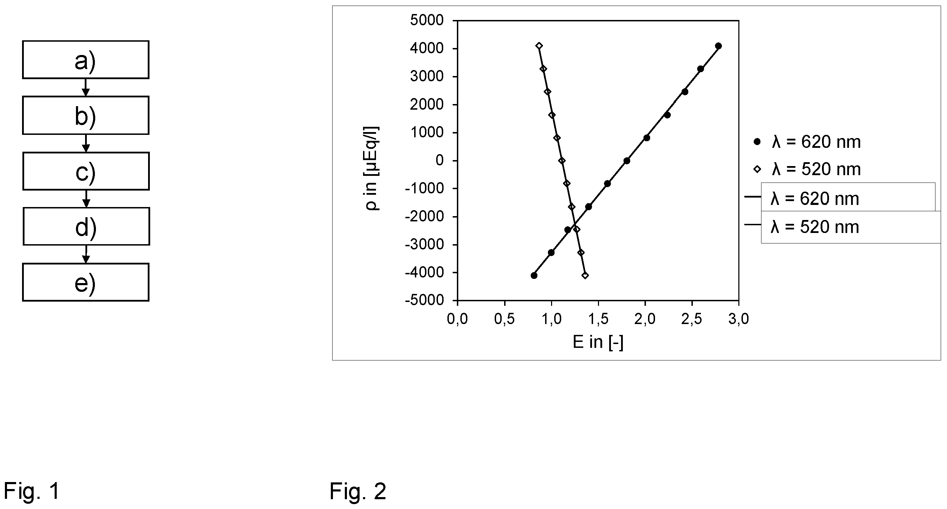

Fig. 1 zeigt schematisch die Durchführung des erfindungsgemäßen Verfahrens zum Bestimmen von Ladungen von in einer flüssigen Phase dispergierten Kolloiden einer Probe. Das Verfahren umfasst zumindest die folgenden Schritte:
a) Bereitstellen eines Analysevolumens umfassend ein erstes Reagenz und die Probe,
b) Hinzugeben eines zweiten Reagenzes zum Analysevolumen,
c) Bereitstellen und Hinzugeben eines dritten Reagenzes zum Analysevolumen, wobei das dritte Reagenz einen Farbstoff mit zumindest einer ionischen Gruppe aufweist, wobei der Farbstoff zumindest ein lokales Absorptionsmaximum bei einer ersten Wellenlänge aufweist, und wobei der Farbstoff zumindest teilweise einen Farbstoff-Komplex mit dem zweiten Reagenz bildet, wobei der Farbstoff-Komplex zumindest ein von dem Farbstoff unterschiedliches lokales Absorptionsmaximum bei einer zweiten Wellenlänge aufweist,
d) Bestrahlen des Analysevolumens mit einer oder mehreren Wellenlängen und Bestimmen des Verhältnisses der durchtretenden Intensität zur einfallenden Intensität unter Erhalt zumindest eines wellenlängenspezifischen ersten optischen Werts,
e) Ermitteln der Ladung der Kolloide aus den optischen Werten unter Verwendung zumindest einer Kalibrierkurve, die eine Abhängigkeit des zumindest einen wellenlängenspezifischen optischen Werts von der Ladung der Kolloide definiert, wobei mindestens eine Wellenlänge der ein oder mehreren Wellenlängen aus dem Bereich, der aus der ersten Wellenlänge oder der zweiten Wellenlänge ±50 nm gebildet wird, ausgewählt ist, wobei das erste oder das zweite Reagenz ein kationisches Molekül umfasst und das andere von dem ersten und zweiten Reagenz ein anionisches Molekül umfasst.

Das Ausführungsbeispiel 1 beschreibt die Bestimmung der Ladung von Kolloiden in einem feindispersen System, in dem keine relevanten Feststoffpartikel größer 1 µm vorhanden sind. Für das Ausführungsbeispiel 1 wurde ein kationisches erstes Reagenz, ein anionisches zweites Reagenz und ein kationisches drittes Reagenz verwendet. Für das Ausführungsbeispiel 1 wurde die in Fig. 2 gezeigte Kalibrierkurve erstellt, um die Abhängigkeit der Extinktion eines Farbstoffs, hier Toluidinblau O, von der Ladung von in der Dispersion vorliegenden Kolloiden zu definieren.

Das Ausführungsbeispiel 2 beschreibt die Bestimmung der Ladung von Feststoffpartikeln eines grobdispersen Systems, wobei mittels des erfindungsgemäßen Verfahrens eine Differenzanalyse durchgeführt wurde. Hierbei wurde einerseits der Anteil der Ladung der in der Suspension dispergierten Kolloiden und andererseits die Summe der Ladungen von Kolloiden und Feststoffpartikeln ermittelt. Da der Beitrag der Kolloide an der Ladung der Suspension bekannt war, konnte dieser von der Summe der Ladungen von Kolloiden und Feststoffpartikeln subtrahiert werden, so dass die Ladung von Feststoffpartikeln erhalten wurde. Für Ausführungsbeispiel 2 wurden die in Ausführungsbeispiel 1 bereitgestellten ersten, zweiten und dritten Reagenzien verwendet.

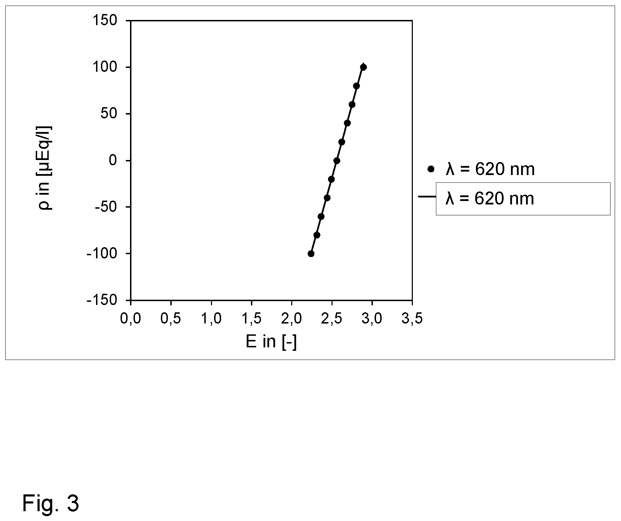

Das Ausführungsbeispiel 3 beschreibt die Bestimmung der Ladung von Kolloiden in einem feindispersen System, in dem keine relevanten Feststoffpartikel größer 1 µm vorhanden sind. Für das Ausführungsbeispiel 3 wurde ein anionisches erstes Reagenz, ein kationisches zweites Reagenz und ein anionisches drittes Reagenz verwendet. Für das Ausführungsbeispiel 3 wurde die in Fig. 3 gezeigte Kalibrierkurve erstellt, um die Abhängigkeit der Extinktion eines Farbstoffs, hier Eriochromschwarz T, von der Ladung von in der Dispersion vorliegenden Kolloiden zu definieren.

### Ausführungsbeispiel 1:

Es wurde eine Probe aus der Zentralleitung einer Dekantierzentrifuge einer Klärschlammentwässerung bereitgestellt, die in einer wässrigen Phase dispergierte Kolloide umfasst. Die Probe wurde anschließend zu gleichen Teilen mit destillierten Wasser verdünnt.

Weiter wurde als erstes Reagenz 1,586 g Polydiallyldimethylammoniumchlorid (PolyDADMAC) (20 Gew.-% in Wasser(Gew.-% = Gewichtsprozent,), M_{w} = 200.000 g/mol bis 350.000 g/mol, Sigma Aldrich) in 5000 ml Reinstwasser mit 18,2 MΩ in dispergiert. Die Äquivalent-Ladung Eq₁ des ersten Reagenzes betrug 0,0005 µEq/l.

Es wurde ein zweites Reagenz bereitgestellt, in dem 0,691 g Kaliumpolyvinylsulfat (KPVS) (99 %, M_{w} = -170.000 g/mol, Sigma Aldrich) in 5000 ml Reinstwasser mit 18,2 MΩ dispergiert wurde. Die Äquivalent-Ladung Eq₂ des zweiten Reagenzes betrug 0,0012 µEq/l.

Außerdem wurde ein drittes Reagenz bereitgestellt, in dem 0,725 g Toluidinblau O (99 %, Qualität MQ 200, Sigma Aldrich) in 5000 ml Reinstwasser mit 18,2 MΩ dispergiert wurde. Die Äquivalent-Ladung Eq₃ des dritten Reagenzes betrug 0,00086 µEq/l. Toluidinblau O weist in freier Form ein Absorptionsmaximum bei 628 nm, so dass der Farbeindruck des dritten Reagenzes als blau wahrgenommen wurde. Der Farbstoff-Komplex aus Toluidinblau O und KPVS weist ein Absorptionsmaximum bei 509 nm auf, so dass der Farbeindruck des Farbstoffkomplexes als violett wahrgenommen wurde.

Das Verhältnis der Äquivalent-Ladungen pro Volumeneinheit des ersten, zweiten und dritten Reagenzes betrug 1:2:2 (Eq₁ : Eq₂ : Eq₃). Hierdurch wurde ein symmetrischer Messbereich erhalten, in dem mit ausreichender Genauigkeit Ladungen zwischen -4000 µEq/l bis +4000 µEq/l ermittelt werden konnten.

In eine Küvette aus Borosilikat mit einer Weglänge von d = 25 mm und einem Aufnahmevolumen von ca. 18 ml, wurden 5 ml des ersten Reagenzes vorgelegt und 1 ml verdünnte Probe hinzu pipettiert. Das erhaltene Analysevolumen wurde mittels eines Magnetrührstäbchen und eines Magnetrührers gerührt.

Anschließend wurden 5 ml des zweiten Reagenzes unter Rühren zu dem Analysevolumen gegeben. Die Küvette mit dem Analysevolumen wurde in den Lichtkanal eines Photometers (DR 3900, Hach Lange GmbH) gestellt. Es wurde die Extinktion des Analysevolumens bei 620 nm und bei 520 nm als optionaler Blindwert ermittelt.

Daraufhin wurden 5 ml des dritten Reagenzes unter Rühren zu dem Analysevolumen pipettiert. Das Analysevolumen wies einen blau-violetten Farbeindruck auf. Es folgte eine erneute Messung der Extinktion des Analysevolumens bei 620 nm und bei 520 nm mit dem vorstehenden Photometer.

In einem weiteren Schritt des Verfahrens wurde jeweils eine Kalibrierkurve der Abhängigkeit der Extinktion bei 620 nm und bei 520 nm von der Konzentration an freien oder gebundenen Farbstoff ermittelt, welche in Fig. 2 gezeigt sind.

Zur Erstellung der Kalibrierkurve wurde als eine kationische Kalibriersubstanz eine 0,1 Gew.-% Polyelektrolyt-Dispersion (Polyacrylamid mit ADAME-Quat CoPolymer als Ladungsgruppe) bereitgestellt, die eine Äquivalent-Ladung 4140 µEq/l aufwies. Weiter wurde als anionische Kalibriersubstanz eine anionische 0,1 Gew.-% Methylcellulose-Dispersion (Dupont) mit einer Äquivalent-Ladung von 4100 µEq/l bereitgestellt. Aus der kationischen Kalibriersubstanz und der anionischen Kalibriersubstanz wurde jeweils eine kationische Kalibrierprobe und eine anionische Kalibrierprobe erstellt, die definierte kationische bzw. anionische Äquivalent-Ladungen aufwiesen.

Anschließend wurden jeweils die Kalibrierproben mit dem Faktor 1 zu 20 mit destillierten Wasser verdünnt, um danach wiederum 11 Verdünnungen mit Wasser in 10 Gew.-% Schritten zu erstellen. Die Verdünnungen wiesen somit die kationische bzw. anionische Kalibrierprobe in einem Bereich von 0 Gew.-% bis 100 Gew.-% auf. Für jede Verdünnung wurde jeweils die Ladung mittels Kolloid-Titration über das Strömungspotential bestimmt. Hierzu wurde ein PCD-05 von BTG Mütek verwendet. Zusätzlich wurde zu je 1 ml jeder Verdünnung je 5 ml erstes zweites und drittes Reagenz gegeben und anschließend die Extinktion bei 620 nm und 520 nm bestimmt. Durch das Auftragen der jeweiligen Extinktion der Verdünnung gegen die entsprechende Äquivalent-Ladung, wurde eine lineare Kalibrierkurve erhalten.

Fig. 2 zeigt ein Diagramm, in dem die Extinktion auf der X-Achse und die Ladung auf der Y-Achse aufgetragen ist. Die Ladung ist mit ρ abgekürzt und weist die Einheit µEq/l auf. Die Extinktion ist dimensionslos mit E abgekürzt. Die ermittelten Messpunkte für die Wellenlänge von 620 nm sind als schwarze Punkte und die ermittelten Messpunkte für die Wellenlänge von 520 nm sind als graue ungefüllte Diamanten eingezeichnet. Eine erhaltene lineare Trendlinie (schwarze durchgezogene Linie) für die Messung bei der Wellenlänge von 620 nm wies ein Bestimmtheitsmaß von R² = 0,9992 auf. Eine erhaltene lineare Trendlinie (graue durchgezogene Linie) für die Messung bei der Wellenlänge von 520 nm wies ein Bestimmtheitsmaß von R² = 0,9993 auf.

Mittels der Kalibrierkurven konnte die Ladung an Kolloiden der bereitgestellten unverdünnten Probe berechnet werden. Bei Verwendung der Extinktion bei der Wellenlänge von 620 nm ergab sich eine Ladung der Kolloide von -331 µEq/l und bei der Verwendung der Extinktion der Wellenlänge von 520 nm ergab sich eine Ladung der Kolloide von -325 µEq/l. Die Kolloide waren anionisch geladen.

Parallel wurde die Ladung der Probe mit gleicher Verdünnung mittels Kolloid-Titration und Messung des Strömungspotential bestimmt (PCD-05, BTG Mütek). Das Ergebnis der Kolloid-Titration betrug für die Ladung der unverdünnten Probe -330 µEq/l.

Um den Ladungsnullpunkt von 0 µEq/l zu erreichen, muss nach der Messung bei der Wellenlänge von 620 nm mittels des erfindungsgemäßen Verfahren eine Ladung von -331 µEq/l neutralisiert werden. In einem beispielhaften technischen Verfahren könnte hierzu Polyaluminiumchlorid (PAC) hinzugegeben werden. Sollte nun in diesem beispielhaften technischen Verfahren eine Koagulation der Kolloide durchgeführt werden, so müssten pro Liter Probe 0,105 g an Polyaluminiumchlorid mit einer Äquivalentladung von 3150 µEq/g hinzugegeben werden müssen, um den Ladungsnullpunkt der Kolloide zu erreichen. Bei der Dosierung ist die Dichte des Polyaluminiumchlorid von beispielsweise ca. 1,35 g/cm³ zu beachten.

### Ausführungsbeispiel 2:

Es wurde als Probe eine Klärschlammsuspension mit einem Feststoffanteil von 24,2 g/l bereitgestellt und mit einem Faktor von 1 zu 20 mit destillierten Wasser verdünnt.

Für die Differenzanalyse wurde eine erste Messung durchgeführt, in der ein erster Aliquot der verdünnten Probe gemessen wurde. Im Folgenden als Aliquot 1 bezeichnet. Anschließend folgte eine zweite Messung, wobei ein zweiter Aliquot der verdünnten Probe bereitgestellt wurde, bei dem die Feststoffpartikel vor der Messung abgetrennt wurden, so dass nur die flüssige Phase der Klärschlammsuspension gemessen vorlag. Im Folgenden als Aliquot 2 bezeichnet.

Die Messungen des Aliquots 1 und des Aliquots 2 erfolgten analog zu den Ausführungen des Ausführungsbeispiel 1 und mit den in Ausführungsbeispiel 1 bereitgestellten ersten, zweiten und dritten Reagenz und der erstellten Kalibriergerade. Im Unterschied zu Ausführungsbeispiel 1 wurde zusätzlich Aliquot 1 während der Messung durchgehend gerührt, so dass die Feststoffpartikel dispergiert blieben und bei Aliquot 2 andererseits vor der Probenahme die Feststoffpartikel durch Sedimentation mit einer Sedimentationszeit von 5 min abgetrennt. Die erhaltenen Ergebnisse der Ladungen mussten um den Faktor der Verdünnung korrigiert werden.

Wie im Ausführungsbeispiel 1 beschrieben wurde analog für Aliquot 1 eine Äquivalent-Ladung von 1.747 µEq/l und Aliquot 2 eine Äquivalent-Ladung von 837 µEq/l bestimmt. Durch Differenzbildung konnte eine Äquivalent-Ladung der Feststoffpartikel der Probe von 910 µEq/l ermittelt werden.

Als Flockungsmittel wurde beispielhaft eine Polymerdispersion umfassend ein kationisch geladenes Polymer mit einer Äquivalent-Ladung von 1980 µEq/l bereitgestellt. Zur Flockung der Feststoffpartikel mit der Äquivalent-Ladung von 910 µEq/l müssten 0,460 Liter des Flockungsmittels zu der unverdünnten Probe hinzugegeben werden.

### Ausführungsbeispiel 3:

Es wurde eine Probe eines verschmutzten Oberflächengewässers zur Aufbereitung entnommen. Bei dieser Art von Probe wird in der Regel eine sehr niedrige Ladung der Kolloide erwartet.

Weiter wurde als erstes Reagenz 0,678 g Quecksilberchlorid (>99 %, wasserfrei, Sigma Aldrich) in 5000 ml Reinstwasser mit 18,2 MΩ in einem Ultraschallbad dispergiert. Die Äquivalent-Ladung Eq₁ des ersten Reagenzes betrug 0,0005 µEq/l.

Es wurde ein zweites Reagenz bereitgestellt, in dem 1,071 g Xanthan Gum (Biozan L) in 5000 ml Reinstwasser mit 18,2 MΩ in einem Ultraschallbad dispergiert wurde. Die Äquivalent-Ladung Eq₂ des zweiten Reagenzes betrug 0,0012 µEq/l.

Außerdem wurde ein drittes Reagenz bereitgestellt, in dem 2,768 g Eriochromschwarz T (>99 %, Merck Millipore) abgewogen und in 5000 ml Reinstwasser mit 18,2 MΩ in einem Ultraschallbad dispergiert wurde. Die Äquivalent-Ladung Eq₃ des dritten Reagenzes betrug 0,0012 µEq/l. Eriochromschwarz T weist in freier Form ein Absorptionsmaximum bei 605 nm auf, so dass der Farbeindruck des dritten Reagenzes als blau wahrgenommen wurde.

Der Farbstoff-Komplex aus Eriochromschwarz T und Hg²⁺ weist ein Absorptionsmaximum bei 555 nm auf, so dass der Farbeindruck des Farbstoffkomplexes als violett wahrgenommen wurde.

Das Verhältnis der Äquivalent-Ladungen pro Volumeneinheit des ersten, zweiten und dritten Reagenzes betrug 1:2:2 (Eq₁: Eq₂ : Eq₃). Der symmetrische Messbereich von -200 µEq/l bis +200 µEq/l wurde dadurch erreicht, dass zum einen die Probe nicht verdünnt wurde und zum anderen nur 2,5 ml der angesetzten Reagenzien zugegeben wurden. Das Probenvolumen betrug 1 ml.

Zur Erstellung der Kalibriergeraden wurde als anionische Kalibrierprobe eine 1:10 verdünnte Natriumpolyvinylsulfonat-Dispersion (PVSA) (BTG Mütek, anionisches Reagenz 1000 µEq/l) verwendet. Als kationische Kalibrierprobe wurde ein 1:10 verdünntes PolyDADMAC-Dispersion (BTG Mütek, kationisches Reagenz 1000 µEq/l) verwendet.

Fig. 3 zeigt ein Diagramm, in dem die Extinktion auf der X-Achse und die Ladung auf der Y-Achse aufgetragen ist. Die Ladung ist mit ρ abgekürzt und weist die Einheit µEq/l auf. Die Extinktion ist dimensionslos mit E abgekürzt. Die ermittelten Messpunkte für die Wellenlänge von 620 nm sind als schwarze Punkte und die Trendlinie als schwarze durchgehende Linie eingezeichnet.

Aus den erstellten Kalibrierproben wurden jeweils Verdünnungen erstellt. Die Verdünnungsschritte waren für die kationische und die anionische Kalibrierprobe jeweils 100 Gew.-% (entspricht der unverdünnten Kalibrierprobe); 80 Gew.-%; 60 Gew.-%; 40 Gew.-%, 20 Gew.-% und 0 Gew.-% (entspricht reinem Wasser).

Ausgehend von der Kalibriergeraden und der ermittelten Extinktion der Probe des verschmutzten Oberflächengewässers wies die unverdünnte Probe des Ausführungsbeispiels 3 ein Ladung von -21 µEq/l auf.

Zur Koagulation mit einer Eisen(III)Chlorid-Lösung (2,5 mol Fe³⁺ pro kg), welches eine Ladungsdichte von 1020 mEq/l aufweist, müssten zur vollständigen Koagulation 20,6 µl/l zugegeben werden, um eine vollständige Koagulation zu erreichen.

Selbstverständlich können die aufgeführten Ausführungsvarianten beliebig miteinander kombiniert werden und stellen keine Limitierung dar.

## Patentansprüche

1. Verfahren zum Bestimmen von Ladungen von in einer flüssigen Phase dispergierten Kolloiden einer Probe, umfassend die folgenden Schritte:
a) Bereitstellen eines Analysevolumens umfassend ein erstes Reagenz und die Probe,
b) Hinzugeben eines zweiten Reagenzes zum Analysevolumen,
c) Bereitstellen und Hinzugeben eines dritten Reagenzes zum Analysevolumen,
wobei das dritte Reagenz einen Farbstoff mit zumindest einer ionischen Gruppe aufweist,
wobei der Farbstoff zumindest ein lokales Absorptionsmaximum bei einer ersten Wellenlänge aufweist,
und wobei der Farbstoff zumindest teilweise einen Farbstoff-Komplex mit dem zweiten Reagenz bildet,
wobei der Farbstoff-Komplex zumindest ein von dem Farbstoff unterschiedliches lokales Absorptionsmaximum bei einer zweiten Wellenlänge aufweist,
d) Bestrahlen des Analysevolumens mit einer oder mehreren Wellenlängen und Bestimmen des Verhältnisses der durchtretenden Intensität zur einfallenden Intensität unter Erhalt zumindest eines wellenlängenspezifischen ersten optischen Werts,
e) Ermitteln der Ladung der Kolloide aus den optischen Werten unter Verwendung zumindest einer Kalibrierkurve, die eine Abhängigkeit des zumindest einen wellenlängenspezifischen optischen Werts von der Ladung der Kolloide definiert,
wobei mindestens eine Wellenlänge der ein oder mehreren Wellenlängen aus dem Bereich, der aus der ersten Wellenlänge oder der zweiten Wellenlänge ±50 nm gebildet wird, ausgewählt ist,
wobei das erste oder das zweite Reagenz ein kationisches Molekül umfasst und das andere von dem ersten und zweiten Reagenz ein anionisches Molekül umfasst.

2. Verfahren nach Anspruch 1
**dadurch gekennzeichnet,**
**dass** das Verfahren den weiteren Schritt f) das Bestimmen eines Blindwerts umfasst, der zwischen Schritt b) und c) durchgeführt wird:
f) Bestrahlen des Analysevolumens mit den ein oder mehreren Wellenlängen und Bestimmen des Verhältnisses der durchtretenden Intensität zur einfallenden Intensität unter Erhalt eines zweiten wellenlängenspezifischen optischen Werts,
wobei in Schritt f) zum Bestimmen der Ladung der Kolloide der zweite wellenlängenspezifische optische Wert von dem jeweiligen ersten wellenlängenspezifischen optischen Wert subtrahiert wird.

3. Verfahren nach Anspruch 1 oder 2
**dadurch gekennzeichnet,**
**dass** das kationische organische Molekül zumindest einen quartären Stickstoff und/oder einen protonierten Stickstoff aufweist.

4. Verfahren nach einem der vorangegangenen Ansprüche
**dadurch gekennzeichnet,**
**dass** das anionische Molekül eine deprotonierte Gruppe, die aus der Gruppe, die aus Carboxy-Gruppe, Sulfonsäure-Gruppe, Schwefelsäure-Monoester-Gruppe, Phosphonsäure-Gruppe, Phosphorsäure-Monoester-Gruppe und Kombinationen davon besteht, ausgewählt ist.

5. Verfahren nach einem der vorangegangenen Ansprüche
**dadurch gekennzeichnet,**
**dass** das erste oder das zweite Reagenz ein kationischer Polyelektrolyt ist,
und das andere von dem ersten und zweiten Reagenz ein anionischer Polyelektrolyt ist.

6. Verfahren nach einem der vorangegangenen Ansprüche
**dadurch gekennzeichnet,**
**dass** der Farbstoff aus der Gruppe, die aus Azo-Farbstoff, Anthrachinon-Farbstoff, Amin-Farbstoff, Dioxazin-Farbstoff, Indiogider-Farbstoff, Methin-Farbstoff, bevorzugt Triphenyl-Farbstoff, Nitro-Farbstoff, Acridin-Farbstoff und Mischungen davon besteht, ausgewählt wird.

7. Verfahren nach einem der vorangegangenen Ansprüche
**dadurch gekennzeichnet,**
**dass** das erste Reagenz ein kationisches Molekül, bevorzugt kationisches organisches Molekül, weiter bevorzugt kationisches Polyelektrolyt, umfasst,
das zweite Reagenz ein anionisches Molekül, bevorzugt organisches anionisches Molekül, weiter bevorzugt anionisches Polyelektrolyt, umfasst
und der Farbstoff ein kationischer Farbstoff ist.

8. Verfahren nach Anspruch 7
**dadurch gekennzeichnet,**
**dass** der Farbstoff aus der Gruppe, die aus Acridinorange (C.I. 46005), Kristallviolett (C.I. 42555), Toluidinblau O (C.I. 52040) und Mischungen davon besteht, ausgewählt wird.

9. Verfahren nach einem der Ansprüche 1 bis 6
**dadurch gekennzeichnet,**
**dass** das erste Reagenz ein anionisches Molekül, bevorzugt anionisches organisches Molekül, weiter bevorzugt anionisches Polyelektrolyt, umfasst,
das zweite Reagenz ein kationisches Molekül, bevorzugt kationisches organisches Molekül, weiter bevorzugt kationisches Polyelektrolyt, umfasst
und der Farbstoff ein anionischer Farbstoff ist.

10. Verfahren nach Anspruch 9
**dadurch gekennzeichnet,**
**dass** der Farbstoff Eriochromschwarz T (C.I. 14645) ist.

11. Verfahren nach einem der vorangegangenen Ansprüche
**dadurch gekennzeichnet,**
**dass** das erste Reagenz eine definierte erste Äquivalent-Ladung (Eq₁) aufweist,
und das zweite Reagenz eine definierte zweite Äquivalent-Ladung (Eq₂) aufweist,
und das dritte Reagenz eine definierte dritte Äquivalent-Ladung (Eq₃) aufweist,
insbesondere wobei die erste und/oder zweite und/oder dritte Äquivalent-Ladung (Eq₁, Eq₂, Eq₃) durch Kolloid-Titration ermittelt ist oder wird.

12. Verfahren nach Anspruch 11
**dadurch gekennzeichnet,**
**dass** die erste Äquivalent-Ladung (Eq₁) mit einem Wert n bereitgestellt wird, wobei n die Anzahl der Äquivalent-Ladung pro Volumeneinheit ist,
und die zweite Äquivalent-Ladung (Eq₂) mit einem Wert x (n+1) bereitgestellt wird,
wobei n die Anzahl der Äquivalent-Ladung pro Volumeneinheit ist,
wobei für den Faktor x gilt: x≥1, bevorzugt 2≤x≤100,
und die dritte Äquivalent-Ladung (Eq₃) mit einem Wert y·(n+1) bereitgestellt wird,
wobei für den Faktor y gilt: y>1, bevorzugt 2≤y≤100.

13. Verfahren nach einem der vorangegangenen Ansprüche
**dadurch gekennzeichnet,**
**dass** die optischen Werte als Extinktion oder als Transmission ermittelt werden.

14. Kit zur Durchführung des Verfahrens nach einem der vorstehenden Ansprüche, umfassend das erste Reagenz, das zweite Reagenz und das dritte Reagenz.

15. System zur Durchführung des Verfahrens nach einem der Ansprüche 1 bis 13, umfassend:
- eine Analysekammer zur Aufnahme des Analysevolumens,
- ein Photometer zur Messung des Verhältnisses der durch die Analysekammer durchtretenden Intensität zu der in die Analysekammer einfallenden Intensität,
- zumindest ein erstes Reservoir für das erste Reagenz,
- zumindest ein zweites Reservoir für das zweite Reagenz,
- zumindest ein drittes Reservoir für das dritte Reagenz,
- zumindest ein viertes Reservoir für die Probe,
- zumindest eine Dosiereinheit zur Dosierung der Probe, des ersten und des zweiten und des dritten Reagenzes,
- eine Recheneinheit zur Verarbeitung von Messergebnissen.
